(19) Europäisches Patentamt
European Patent Office
Office européen des brevets

(11) **EP 4 467 835 B1**

(12) **EUROPÄISCHE PATENTSCHRIFT**

(45) Veröffentlichungstag und Bekanntmachung des Hinweises auf die Patenterteilung:
**25.03.2026   Patentblatt 2026/13**

(21) Anmeldenummer: **24173723.8**

(22) Anmeldetag: **02.05.2024**

(51) Internationale Patentklassifikation (IPC):
**F16D 48/06** *(2006.01)*

(52) Gemeinsame Patentklassifikation (CPC):
**F16D 48/06;** F16D 2500/10412; F16D 2500/111;
F16D 2500/30421; F16D 2500/30426;
F16D 2500/30428; F16D 2500/3166;
F16D 2500/5018; F16D 2500/70454

(54) **VERFAHREN UND VORRICHTUNG ZUR KALIBRIERUNG EINER KUPPLUNG UND LANDWIRTSCHAFTLICHES ZUGFAHRZEUG**

METHOD AND DEVICE FOR CALIBRATING A CLUTCH AND AGRICULTURAL TOWING VEHICLE

PROCÉDÉ ET DISPOSITIF D'ÉTALONNAGE D'UN EMBRAYAGE ET VÉHICULE DE TRACTION AGRICOLE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **24.05.2023   DE 102023113595**

(43) Veröffentlichungstag der Anmeldung:
**27.11.2024   Patentblatt 2024/48**

(73) Patentinhaber: **Deere & Company**
**Moline, IL 61265 (US)**

(72) Erfinder:
• **KEGEL, VOLKER**
**69163 Mannheim (DE)**

• **MUELLER, DAVID**
**69163 Mannheim (DE)**
• **GUGEL, RAINER**
**69163 Mannheim (DE)**
• **FRITZ, NORBERT**
**69163 Mannheim (DE)**

(74) Vertreter: **Stein, Stefan**
**John Deere GmbH & Co. KG**
**Global Intellectual Property Services**
**John-Deere-Straße 70**
**68163 Mannheim (DE)**

(56) Entgegenhaltungen:
DE-B4- 102018 200 835       US-A1- 2015 094 922
US-A1- 2017 198 656         US-A1- 2018 187 728
US-B2- 10 060 486

EP 4 467 835 B1

**Beschreibung**

Die Erfindung betrifft ein Verfahren gemäß dem Oberbegriff des unabhängigen Anspruchs 1, eine Vorrichtung gemäß dem Oberbegriff des unabhängigen Anspruchs 12 und ein landwirtschaftliches Zugfahrzeug gemäß dem Oberbegriff des unabhängigen Anspruchs 14.

Aus EP 1 293 697 A2 sind ein Verfahren und eine Vorrichtung zur Steuerung einer hydraulisch betriebenen Kupplung, insbesondere einer Zapfwellenkupplung, innerhalb eines Antriebsstranges einer Landmaschine bekannt. Die Kupplung wird durch ein elektro-magnetisch betätigtes Proportionalventil angesteuert. Dabei erfolgt durch Sensoren eine Drehzahlermittlung vor und hinter der Kupplung, woraus ein Kupplungsschlupf ermittelt wird. Durch gesteuerte zeitliche Änderung des dem Kupplungsdruck entsprechenden Wertes eines Ventilstromes des Proportionalventils wird der Kupplungsschlupf laufend auf einen konstanten Wert eingestellt und gehalten. Hierbei wird davon ausgegangen, dass bei konstantem bzw. geregeltem Schlupfwert ein fester Zusammenhang zwischen einem an der Zapfwelle wirkenden Abtriebsmoment und dem Ventilstrom besteht, welcher sich durch Versuche oder theoretische Berechnungen ermitteln lässt. Mit Hilfe dieses festen Zusammenhangs wird aus dem vorliegenden Schlupfwert und dem Ventilstrom das Abtriebsmoment bestimmt. Eine Voraussetzung für die Drehmomentbestimmung ist folglich die Bereitstellung des vorgenannten festen Zusammenhangs im Sinne von Kalibrierdaten bezüglich einer Kupplung. US 2015/094922 A1 und DE 10 2018 200 835 A1 offenbaren und lehren Kalibrierungsvefahren im weiteren Sinne. US 10,060,486 B2 und US 2018/187728 A1 befassen sich mit dem Schliessen einer Zapfwellenkupplung. US 2017/198,656 A1 offenbart ein Verfahren zur Aufrechterhaltung einer Motorgeschwindigkeit.

Ausgehend von diesem Stand der Technik ist es Aufgabe der vorliegenden Erfindung, ein Verfahren, eine Vorrichtung und ein landwirtschaftliches Zugfahrzeug vorzuschlagen, die auf technisch einfache Weise eine präzise Kalibrierung innerhalb eines Antriebsstranges des Zugfahrzeugs ermöglichen.

Diese Aufgabe wird durch ein Verfahren mit den Merkmalen des Anspruchs 1, eine Vorrichtung mit den Merkmalen des Anspruchs 12 und ein landwirtschaftliches Zugfahrzeug mit den Merkmalen des Anspruchs 14 gelöst. Die abhängigen Ansprüche beziehen sich auf besonders vorteilhafte Ausführungsformen der Erfindung. Erfindungsgemäß wird ein Verfahren zur Kalibrierung einer innerhalb eines Antriebsstranges eines landwirtschaftlichen Nutzfahrzeugs angeordneten und ausgewählten Kupplung vorgeschlagen. Das Nutzfahrzeug ist vorzugsweise ein Traktor oder Schlepper. Die jeweils ausgewählte Kupplung ist zwischen einem geschlossenen Zustand (mit vollständiger Kraftübertragung) und einem geöffneten Zustand (mit unterbrochener Kraftübertragung) ansteuerbar. Während der Kalibrierung ist die ausgewählte Kupplung antriebsseitig mit einem laufenden Antriebsmotor des Zugfahrzeugs antriebsverbunden. Abtriebsseitig ist die Kupplung mit einer Abtriebswelle antriebsverbunden. Die Kupplung wird angesteuert und der Wert einer die Kupplungsansteuerung bewirkenden physikalischen Größe (z.B. elektrischer Ventilstrom eines die Kupplung ansteuernden hydraulischen Ventils) wird festgelegt bzw. eingestellt. Parallel, insbesondere zeitgleich, wird eine die Rotation der Abtriebswelle repräsentierende physikalische Größe und erfindungsgemäss nämlich die Winkelbeschleunigung ermittelt. In Abhängigkeit von dieser Rotations-Größe der Abtriebswelle - und insbesondere unter zusätzlicher Berücksichtigung weiterer physikalischer Größen wie beispielsweise eines bekannten Trägheitsmoments dieser Abtriebswelle - kann physikalisch betrachtet ein Drehmoment der ausgewählten Kupplung ermittelt werden. Die Rotations-Größe der Abtriebswelle wird deshalb dem Wert der die Kupplungsansteuerung bewirkenden physikalischen Größe zugeordnet. In Abhängigkeit von dieser Zuordnung können kupplungsspezifische Kalibrierdaten (z.B. Wertetabelle, Formel(n), Kennlinie) generiert werden.

Die Kalibrierdaten der ausgewählten Kupplung lassen sich mit geringem technischen Aufwand generieren und können deshalb für unterschiedliche technische Anwendungen kostengünstig bereitgestellt werden. Für die Generierung, insbesondere Ermittlung und/oder Berechnung, der Kalibrierdaten bleibt der technische Basisaufwand gering bei gleichzeitig hoher Datengenauigkeit, indem lediglich der Wert einer die Kupplungsansteuerung bewirkenden physikalischen Größe (z.B. elektrischer Steuerstrom eines die Kupplung ansteuernden hydraulischen Ventils) festgelegt oder technisch eingestellt wird und in diesem festgelegten oder eingestellten Zustand eine die Rotation der Abtriebswelle repräsentierende physikalische Größe (z.B. Winkelbeschleunigung) ermittelt wird. Eine Zuordnung des Wertes der Kupplungsansteuerungs-Größe und der Rotations-Größe der Abtriebswelle zueinander kann mit weiteren bekannten Werten charakteristischer physikalischer Größen (z.B. ein Trägheitsmoment der Abtriebswelle) mathematisch kombiniert werden, um davon abgeleitet Kalibrierdaten für diese Kupplung zu generieren.

Insbesondere enthalten die Kalibrierdaten aufgrund der einander zugeordneten spezifischen physikalischen Größen und Werte eine Drehmoment-Charakteristik der ausgewählten Kupplung. In einer bevorzugten technischen Anwendung können die Kalibrierdaten deshalb dazu bereitgestellt werden, an bestimmten Positionen des Antriebsstranges eines landwirtschaftlichen Zugfahrzeugs die dort wirkenden Drehmomente zu ermitteln. Hierdurch kann durch die Anwendung der Kalibrierdaten ein technisch einfaches und kostengünstiges Antriebsmanagement (z.B. Traktionshilfe) für das Zugfahrzeug unterstützt werden.

Das Verfahren lässt sich insbesondere für jede beliebige Kupplung innerhalb des Antriebsstranges des Zugfahrzeugs durchführen. Hierdurch können technische Anwendungen der generierten Kalibrierdaten noch flexibler durchgeführt werden. Beispielsweise kann eine präzise Ermittlung von Drehmomenten innerhalb des Antriebsstranges eines landwirtschaftlichen Zugfahrzeugs mittels mehrerer und/oder unterschiedlicher Kupplungen unterstützt werden.

In einer vorteilhaften Ausgestaltung wird das Verfahren nacheinander für unterschiedlich festgelegte oder eingestellte Werte der die Kupplungsansteuerung bewirkenden physikalischen Größe durchgeführt. Auf diese Weise kann als Kalibrierdaten eine vollständige und präzise kupplungsspezifische Kennlinie generiert werden.

Wie bereits erwähnt, wird während der Verfahrensdurchführung eine die Rotation der Abtriebswelle repräsentierende physikalische Größe ermittelt. Diese Größe ist eine Drehzahl der Abtriebswelle und erfindungsgemäss eine Winkelgeschwindigkeit der Abtriebswelle oder eine Winkelbeschleunigung der Abtriebswelle. Die Werte dieser Größen können vorteilhaft ohne technischen Mehraufwand über einen im Antriebsstrang ohnehin vorhandenen Drehzahlsensor ermittelt werden.

Erfindungsgemäss ist bei der Winkelbeschleunigung als ermittelte Rotations-Größe der Abtriebswelle der zeitliche Verlauf dieser Winkelbeschleunigung insbesondere derart aufgebaut, dass sie eine durch die Ansteuerung der ausgewählten Kupplung bewirkte Beschleunigungsphase aufweist. Weiterhin weist der zeitliche Verlauf dieser Winkelbeschleunigung eine Verzögerungsphase (negative Beschleunigung) auf, welche zumindest entlang eines zeitlichen Abschnittes durch die Ansteuerung einer im Leistungsfluss des Antriebsstranges nachfolgenden Kupplungseinheit bewirkt wird. Mit derart ermittelten zeitlichen Beschleunigungs- und Verzögerungsabläufen der Winkelbeschleunigung können bei der Generierung der Kalibrierdaten physikalische Eigenschaften des Antriebsstranges, insbesondere Schleppmomente der Kupplungen und/oder Reibmomente und/oder Lagerreibungen der Antriebswelle, berücksichtigt werden. Dies unterstützt die physikalische Genauigkeit der Kalibrierdaten.

In weiterer Ausgestaltung der Erfindung wird ein Trägheitsmoment der Abtriebswelle berücksichtigt, indem dieses Trägheitsmoment bzw. dessen Wert in die kupplungsspezifischen Kalibrierdaten integriert wird. Insbesondere ist das Trägheitsmoment der Abtriebswelle bereits bekannt oder kann durch Berechnungen als bekannt ermittelt werden. Die Berücksichtigung des Trägheitsmoments in den Kalibrierdaten erleichtert deren technische Anwendung für Drehmomentermittlungen, da ein Drehmoment vorzugsweise von einem mathematischen Produkt aus einem Trägheitsmoment und einer Rotations-Größe, die erfindungsgemäss die Winkelbeschleunigung ist, abgeleitet werden kann.

In einer besonders vorteilhaften Ausgestaltung ist in den Kalibrierdaten der Wert mindestens einer physikalischen Korrekturgröße enthalten. Mit anderen Worten werden die zu generierenden Kalibrierdaten einer oder mehreren Korrekturgrößen bzw. deren Korrekturwerten ergänzt. Die Berücksichtigung der Korrekturgröße(n) unterstützt die Generierung technisch präziser Kalibrierdaten für die jeweils ausgewählte Kupplung. Insbesondere umfasst die mindestens eine physikalische Korrekturgröße das Schleppmoment der ausgewählten Kupplung und/oder das Reibmoment und/oder die Lagerreibung einer der Abtriebswellen im Leistungsfluss des Antriebsstranges nachgelagerten Kupplungseinheit.

Vorzugsweise werden die ausgewählte Kupplung und eine oder mehrere der Abtriebswelle im Leistungsfluss nachgelagerte Kupplungseinheit(en) während der Verfahrensdurchführung in spezifischer Weise und zeitlich nacheinander für spezifische Zeitdauern angesteuert, um geeignete Beschleunigungs- und Verzögerungsabläufe an der Abtriebswelle zu realisieren und die bei diesen zeitlichen Abläufen entstehenden Werte relevanter physikalischer Größen zu erfassen, z.B. die Drehzahlen, und erfindungsgemäss die Werte einer Winkelbeschleunigung der Abtriebswelle. Hierdurch kann die vorgenannte mindestens eine physikalische Korrekturgröße bzw. können deren Werte verfahrenstechnisch effizient ermittelt und in den Kalibrierdaten berücksichtigt werden. Insbesondere wird während der Beschleunigungs- und Verzögerungsabläufe mindestens einer der folgenden Verfahrensschritte durchgeführt:

- die Abtriebswelle wird im Leistungsfluss des Antriebsstranges von allen vor- und nachgelagerten Antriebsverbindungen getrennt;
- die Abtriebswelle wird beschleunigt, indem sie mit dem Antriebsmotor antriebsverbunden wird und von den im Leistungsfluss des Antriebsstranges nachgelagerten Antriebsverbindungen getrennt wird;
- die mit dem Antriebsmotor antriebsverbundene Abtriebswelle rotiert mit einer Drehzahl, insbesondere konstanter Drehzahl;
- die rotierende Abtriebswelle wird verzögert, indem eine im Leistungsfluss des Antriebsstranges nachfolgende Kupplungseinheit mit einem festgelegten Wert einer deren Kupplungsansteuerung bewirkenden physikalischen Größe angesteuert wird, wobei ein abtriebsseitiges Drehmoment dieser Kupplungseinheit gleich Null ist.

Eine vorteilhafte Weiterbildung sieht vor, dass während einer Verzögerung der rotierenden Abtriebswelle die ausgewählte Kupplung in ihrem geöffneten Zustand ist. Hierdurch ist gewährleistet, dass in den Kalibrierdaten spezifische physikalische Verzögerungseigenschaften, insbesondere der Abtriebswelle, mit hoher Genauigkeit berücksichtigt sind.

In einer weiteren bevorzugten Ausführung ist eine Parksperre und/oder eine Bremsvorrichtung des Zugfahrzeugs zumindest während des Verfahrensschrittes einer Verzögerung der Abtriebswelle aktiviert. Dies ermöglicht auf technisch einfache Weise in bestimmten Abschnitten des Antriebsstranges während der Kalibrierung eine Blockierung und somit Verfahrenszustände mit Drehmomenten gleich Null. Beispielsweise kann dieser Verfahrenszustand bei einer rotierenden Abtriebswelle genutzt werden, deren Rotation durch eine im Leistungsfluss nachfolgende Kupplungseinheit verzögert werden soll, indem letztere (z.B. über ein hydraulisches Ventil) angesteuert wird und gleichzeitig ein abtriebsseitiges Drehmoment gleich Null aufweisen soll.

In Ausgestaltung der Erfindung wird während der Verfahrensdurchführung zur Generierung kupplungsspezifischer Kalibrierdaten einer ausgewählten Kupplung die Motor-Drehzahl des Antriebsmotors des Zugfahrzeugs zumindest zeitweise, insbesondere während der gesamten Verfahrenszeit, konstant gehalten. Dies gewährleistet während der Verfahrensdurchführung gleichbleibende physikalische Bedingungen und erleichtert die Generierung technisch exakter Kalibrierdaten.

Die Erfindung betrifft weiter eine Vorrichtung zur Kalibrierung einer ausgewählten Kupplung, welche innerhalb eines Antriebsstranges eines landwirtschaftlichen Zugfahrzeugs angeordnet zwischen einem geschlossenen und einem geöffneten Zustand ansteuerbar ist. Die Vorrichtung umfasst eine Steuereinheit zur Durchführung des Verfahrens nach einem der Ansprüche 1 bis 11. Insbesondere steuert die Steuereinheit die ausgewählte Kupplung zwischen einem geschlossenen und einem geöffneten Zustand an. Unterschiedliche Zustände der Kupplung werden insbesondere dadurch erreicht, dass die Steuereinheit den Wert einer die Kupplungsansteuerung bewirkenden physikalischen Größe verändert bzw. variiert. Dabei ist die ausgewählte Kupplung antriebsseitig mit einem laufenden Antriebsmotor des Zugfahrzeugs antriebsverbunden und abtriebsseitig mit einer Abtriebswelle antriebsverbunden. Während der Verfahrensdurchführung legt die Steuereinheit den Wert einer die Kupplungsansteuerung bewirkenden physikalischen Größe fest bzw. stellt diesen Wert ein, z.B. den elektrischen Steuerstrom eines die Kupplung ansteuernden hydraulischen Ventils. Parallel, insbesondere zeitgleich, ermittelt die Steuereinheit eine die Rotation der Abtriebswelle repräsentierende physikalische Größe (z.B. Winkelgeschwindigkeit). Die Steuereinheit ordnet den festgelegten bzw. eingestellten Wert der Ansteuerungs-Größe und die Rotations-Größe bzw. deren Werte einander zu. Diese Zuordnung kann beispielsweise für unterschiedliche festgelegte bzw. eingestellte Werte der Ansteuerungs-Größe nach Art einer Wertetabelle erfolgen. Auf Basis der Zuordnung und ggf. der Werte weiterer charakteristischer physikalischer Größen (z.B. ein Trägheitsmoment der Abtriebswelle) können von der Steuereinheit Kalibrierdaten (z.B. Wertetabelle, Formel(n), Kennlinie) für die ausgewählte Kupplung generiert werden. Insbesondere enthalten die Kalibrierdaten aufgrund der einander zugeordneten spezifischen physikalischen Größen eine Drehmoment-Charakteristik der ausgewählten Kupplung. Im Betriebseinsatz des Zugfahrzeugs können deshalb mittels der Kalibrierdaten verschiedene im Antriebsstrang wirkende Drehmomente mit geringem technischen Aufwand ermittelt werden. Mit derart ermittelbaren Drehmomenten kann die Vorrichtung ein technisch einfaches und kostengünstiges Antriebsmanagement (z.B. Traktionshilfe) für das Zugfahrzeug unterstützen.

Die Vorrichtung und ihre Steuereinheit können insbesondere für jede beliebige Kupplung innerhalb des Antriebsstranges des landwirtschaftlichen Zugfahrzeugs kupplungsspezifische Kalibrierdaten generieren. Hierdurch können technische Anwendungen der generierten Kalibrierdaten noch flexibler durchgeführt werden, beispielsweise die Ermittlung von Drehmomenten innerhalb des Antriebsstranges mittels mehrerer und/oder unterschiedlicher Kupplungen.

Die Steuereinheit kann als ein elektronisches Modul, ein eingebettetes System, eine Recheneinheit, ein Computer, als ein Modul zum Steuern und/oder Regeln einzelner Bestandteile der Vorrichtung ausgebildet sein. Die Steuereinheit kann einen Prozessor, einen Speicher und/oder alle Software, Hardware, Algorithmen, Anschlüsse, insbesondere auch Sensoren, umfassen, die für die Steuerung und/oder Regelung der Vorrichtung oder Bestandteilen davon erforderlich sind. Einzelne oder sämtliche Verfahrensschritte des offenbarten Verfahrens können als Programm oder Algorithmus ausgebildet sein, das auf und/oder mit der Steuereinheit ausführbar ist. Die Steuereinheit kann jedes Gerät umfassen, das Daten von verschiedenen Sensoren analysieren, Daten vergleichen und die erforderlichen Entscheidungen treffen kann, um den Betrieb der Vorrichtung und die erforderlichen Aufgaben zur Steuerung des Betriebs der Vorrichtung zu steuern und/oder zu regeln und/oder auszuführen.

Die Steuereinheit kann mit der Vorrichtung, insbesondere den Bauteilen (z.B. Sensoren, hydraulische Ventile) der Vorrichtung verbunden sein, bevorzugt signalverbunden und/oder signalübertragend und/oder datenleitend verbunden sein. Die Steuereinheit kann zur Steuerung und/oder Regelung und/oder Ansteuerung der miteinander verbundenen Bauteile dienen. Unter einer signalverbundenen und/oder signalübertragenden und/oder datenleitenden Verbindung ist dabei zu verstehen, dass ein Austausch von Signalen zwischen den verbundenen Bauteilen stattfindet. Die Verbindung kann kabelgebunden, insbesondere also mit Kabel, und/oder kabellos, also per Funk, beispielsweise mit Bluetooth realisiert sein. Der Kommunikationsbus kann beispielsweise Isobus, CAN-Bus oder ähnliches sein. Die Steuereinheit kann der Vorrichtung zur Durchführung des Verfahrens und/oder dem landwirtschaftlichen Zugfahrzeug zugeordnet sein, insbesondere am Zugfahrzeug angeordnet sein. Die Steuereinheit kann auch zweiteilig beispielsweise als Teil des landwirtschaftlichen Zugfahrzeugs und als Teil der Vorrichtung ausgebildet sein. Die Steuereinheit kann unmittelbar mit der in einer Kabine des Zugfahrzeugs angeordneten Ein- und Ausgabeeinheit in Verbindung stehen, durch welche von einer Bedienperson bzw. dem Fahrzeugführer eingegebene Daten an die Steuereinheit übertragen oder von dieser empfangen und ausgegeben werden können. Denkbar ist aber auch, dass die Steuereinheit mittelbar durch eine übergeordnete Steuereinheit mit der Ein- und Ausgabeeinheit verbunden ist.

In Ausgestaltung der Erfindung umfasst die Vorrichtung ein hydraulisches Ventil zur Ansteuerung einer ausgewählten Kupplung des Antriebsstranges. Mittels der Steuereinheit ist das hydraulische Ventil betätigbar und/oder einstellbar, so dass die Kupplung zwischen einem geschlossenen und einem geöffneten Zustand ansteuerbar ist. Dabei legt die Steuereinheit insbesondere die Werte eines elektrischen Steuerstromes für das hydraulische Ventil fest bzw. stellt diese Werte ein. Weiterhin kann die Steuereinheit die festgelegten bzw. eingestellten Werte überwachen und/oder verarbeiten. Die Steuereinheit kann auch (z.B. mittels eines Drucksensors) die Werte eines Ausgangsdruckes dieses hydraulischen Ventils verarbeiten.

Erfindungsgemäss umfasst die Vorrichtung einen Drehzahlsensor zur Erfassung einer Drehzahl einer Abtriebswelle, welche an der Abtriebsseite der ausgewählten Kupplung mit dieser antriebsverbunden ist. Mittels der erfassten Drehzahlwerte können neben der Drehzahl selbst technisch einfach auch andere die Rotation der Abtriebswelle repräsentierende physikalische Größen und nämlich erfindungsgemäss die Winkelbeschleunigung ermittelt werden.

Die Erfindung betrifft weiter ein landwirtschaftliches Zugfahrzeug, bevorzugt ein Traktor oder Schlepper, mit einer Vorrichtung nach Anspruch 12 oder 13. Durch die im Zugfahrzeug integrierte Vorrichtung können beliebige Kupplungen innerhalb des Antriebsstranges des Zugfahrzeugs mit geringem technischen Aufwand kalibriert werden.

Dies erfolgt, indem eine Steuereinheit der Vorrichtung für die ausgewählte Kupplung und eine mit dieser Kupplung abtriebsseitig antriebsverbundene Abtriebswelle die Werte spezifischer physikalischer Größen einander zuordnet. Dabei wird der ermittelte Wert einer Rotations-Größe (z.B. Winkelgeschwindigkeit) der Abtriebswelle dem festgelegten bzw. eingestellten Wert einer Ansteuerungs-Größe (z.B. elektrischer Steuerstrom eines hydraulischen Ventils) zugeordnet. Auf Basis dieser Zuordnung und ggf. der Werte weiterer charakteristischer physikalischer Größen (z.B. ein Trägheitsmoment der Abtriebswelle) können von der Vorrichtung des Zugfahrzeugs Kalibrierdaten (z.B. Wertetabelle, Formel(n), Kennlinie) für die ausgewählte Kupplung generiert werden. Insbesondere enthalten die Kalibrierdaten aufgrund der einander zugeordneten spezifischen physikalischen Größen eine Drehmoment-Charakteristik der ausgewählten Kupplung. Im Betriebseinsatz des Zugfahrzeugs können deshalb mittels der kupplungsspezifischen Kalibrierdaten verschiedene im Antriebsstrang wirkende Drehmomente mit geringem technischen Aufwand ermittelt werden. Mit derart ermittelbaren Drehmomenten kann ein technisch einfaches und kostengünstiges Antriebsmanagement (z.B. Traktionshilfe) für das Zugfahrzeug unterstützt werden.

Insbesondere kann das landwirtschaftliche Zugfahrzeug mit der Vorrichtung für jede beliebige Kupplung innerhalb seines Antriebsstranges kupplungsspezifische Kalibrierdaten generieren. Hierdurch können technische Anwendungen der generierten Kalibrierdaten noch flexibler durchgeführt werden, beispielsweise die Ermittlung von Drehmomenten innerhalb des Antriebsstranges mittels mehrerer und/oder unterschiedlicher Kupplungen.

Zur Generierung von Kalibrierdaten $\beta$ für das Verfahren und die Vorrichtung und das Zugfahrzeug für eine ausgewählte Kupplung Km.n sind insbesondere folgende Größen relevant:

- die festgelegten bzw. eingestellten Steuerströme I_st_m.n (an der Kupplung Km.n) und I_st_m+1.n (an der Kupplung Km+1.n),
- die mittels des Drehzahlsensors erfassten Drehzahlen n_m der Abtriebswelle Wm und der daraus ermittelten Winkelbeschleunigung $\alpha$ der Abtriebswelle Wm,
- das durch Berechnung bekannte Trägheitsmoment Jm der Abtriebswelle Wm,
- die eingestellte Drehzahl n_motor des Antriebsmotors,
- das Übersetzungsverhältnis Rm.n.

Diese Größen bzw. deren Werte werden einander zugeordnet zur Generierung der Kalibrierdaten $\beta$ in Abhängigkeit von dieser Zuordnung.

Für die Kalibrierdaten $\beta = (\beta1, \beta2, \beta3, \beta4)$ gilt definitionsgemäß die Gleichung

$$\beta = X \setminus \alpha \qquad\qquad \text{(Gl. 1),}$$

wobei X als eine Matrix mit vier Vektoren X1, X2, X3, X4 definiert sein kann. Dabei gelten folgende Gleichungen

$$X1 = n\_m^2 \qquad\qquad \text{(Gl. 2),}$$

$$X2 = (n\_m - (n\_motor \cdot Rm.n))^2 \qquad\qquad \text{(Gl. 3),}$$

$$X3 = I\_st\_m.n \qquad\qquad \text{(Gl. 4),}$$

$$X4 = I\_st\_m+1.n \qquad\qquad \text{(Gl. 5).}$$

Ausgehend von den Gleichungen Gl. 2 bis Gl. 5 wird Gleichung Gl. 1 berechnet. Dadurch erhält man den Ergebnisvektor β. Dabei gilt:

$$\beta 1 = f1 \ / \ Jm \tag{Gl. 6},$$

$$\beta 2 = f2 \ / \ Jm \tag{Gl. 7},$$

$$\beta 3 = Mm \ / \ Jm \tag{Gl. 8},$$

$$\beta 4 = Mm+1 \ / \ Jm \tag{Gl. 9}.$$

Dabei können die Komponenten β1, β2 als physikalische Korrekturgrößen betrachtet werden.

Die Komponente β1 enthält einen Faktor f1, welcher die Summe aus dem Schleppmoment M_sm+1 zu den Kupplungen Km+1.1 bis Km+1.n und das Reibmoment M_r umfasst, also f1 = -(M_sm+1-M_r).

Die Komponente β2 enthält einen Faktor f2 = - M_sm, welcher das Schleppmoment M_sm zu den Kupplungen Km.1 bis Km.n umfasst.

Das Drehmoment Mm ergibt sich aus β3 · Jm für die Kupplung Km.n bei einem durch die Steuereinheit 52 festgelegten bzw. eingestellten Steuerstrom I_st_m.n. Das Drehmoment Mm+1 ergibt sich aus β4 · Jm für die Kupplung Km+1.n bei einem durch die Steuereinheit 52 festgelegten bzw. eingestellten Steuerstrom I_st_m+1.n.

Die vorgenannten Verfahrensschritte zur Kalibrierung einer ausgewählten Kupplung Km.n können für unterschiedlich festgelegte Werte der Steuerströme I_st_m.n, I_st_m+1.n wiederholt werden, so dass in den Kalibrierdaten β, insbesondere in der Komponente β3, ein Drehmoment Mm der Kupplung Km.n für unterschiedliche Steuerströme I_st_m.n enthalten ist. Mit anderen Worten repräsentieren die Kalibrierdaten β, insbesondere die Komponente β3, eine Drehmoment-Charakteristik der Kupplung Km.n. Diese Drehmoment-Charakteristik kann mittels der Kalibrierdaten β, insbesondere der Komponente β3, als eine vollständige Kennlinie bereitgestellt werden.

Die Kalibrierdaten β können für jede beliebige Kupplungen Km.n innerhalb des Antriebsstranges bzw. der Getriebeanordnung generiert werden.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1    eine schematische Darstellung eines erfindungsgemäßen landwirtschaftlichen Zugfahrzeugs, und

Fig. 2    eine schematische und blockschaltbildartige Darstellung einzelner Bestandteile des landwirtschaftlichen Zugfahrzeugs und eines ersten Ausführungsbeispiels der erfindungsgemäßen Vorrichtung zur Durchführung des erfindungsgemäßen Verfahrens, und

Fig. 3    ein Flussdiagramm mit Verfahrensschritten zur Durchführung des erfindungsgemäßen Verfahrens.

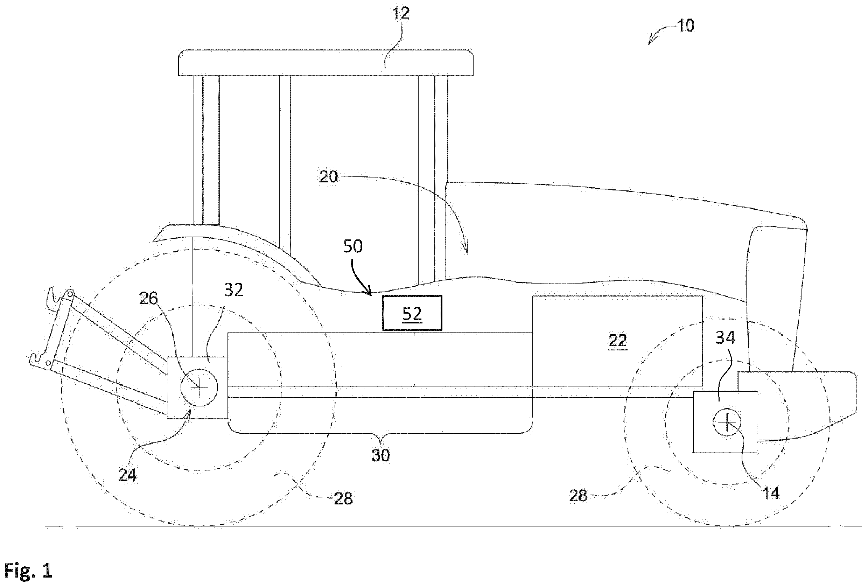

Figur 1 zeigt eine schematische Darstellung eines erfindungsgemäßen landwirtschaftlichen Zugfahrzeugs 10, insbesondere in Gestalt eines Traktors, mit einem Antriebsstrang 20 in einer möglichen Ausgestaltung. Der grundsätzliche Aufbau eines landwirtschaftlichen Zugfahrzeugs 10 wird als dem Fachmann bekannt angenommen. Das Zugfahrzeug 10 umfasst ferner eine Kabine 12, eine vordere Fahrzeugachse 14 und eine hintere Fahrzeugachse 26. Die vordere Fahrzeugachse 14 und die hintere Fahrzeugachse 26 sind Teil des Antriebsstrangs 20, wobei die hintere Fahrzeugachse 26 in der Regel permanent und die vordere Fahrzeugachse 14 in der Regel bedarfsweise zuschaltbar angetrieben werden können.

Der Antriebsstrang 20 umfasst ferner einen Antriebsmotor 22, der als Verbrennungskraftmaschine ausgeführt sein kann, und eine Getriebestruktur, die aus verschiedenen einzelnen Getriebekomponenten zusammengesetzt sein kann. Die Getriebestruktur kann ausgehend vom Antriebsmotor 22 im Kraft- und Momentenfluss eine Getriebeanordnung 30, einen Fahrantrieb 24, ein hinteres Achsgetriebe 32 und ein vorderes Achsgetriebe 34 aufweisen. Mit der Getriebeanordnung 30 lässt sich Antriebsleistung des Antriebsmotors 22, insbesondere mit unterschiedlichen Gangstufen, auf die hintere Fahrzeugachse 26 und bedarfsweise zusätzlich an die vordere Fahrzeugachse 14 übertragen. Die hintere Fahrzeugachse 26, welche eine Drehung der vorderen und/oder hinteren Fahrzeugachse (über damit verbundene Bodeneingriffsmittel) in einen Vorschub des Traktors 10 wandelt, wird daher abhängig von einer in der Getriebeanordnung 30 gewählten Gangstufe mit unterschiedlicher Drehzahl angetrieben. Das Zugfahrzeug 10 kann eines oder mehrere Bodeneingriffsmittel in Form von Rädern 28 aufweisen, welche mit einem Untergrund zur Übertragung von Antriebskräften in Eingriff stehen und/oder durch die sich das Zugfahrzeug 10 auf dem Untergrund abstützt. Das Zugfahrzeug 10 kann außerdem ein Fahrgestell aufweisen, wobei das Fahrgestell insbesondere von den an der vorderen und hinteren Fahrzeugachse 14, 26 aufgehängten Rädern getragen werden kann.

In dem Zugfahrzeug 10 ist außerdem eine erfindungsgemäße Vorrichtung 50 mit einer Steuereinheit 52 zur Durchführung des erfindungsgemäßen Verfahrens enthalten.

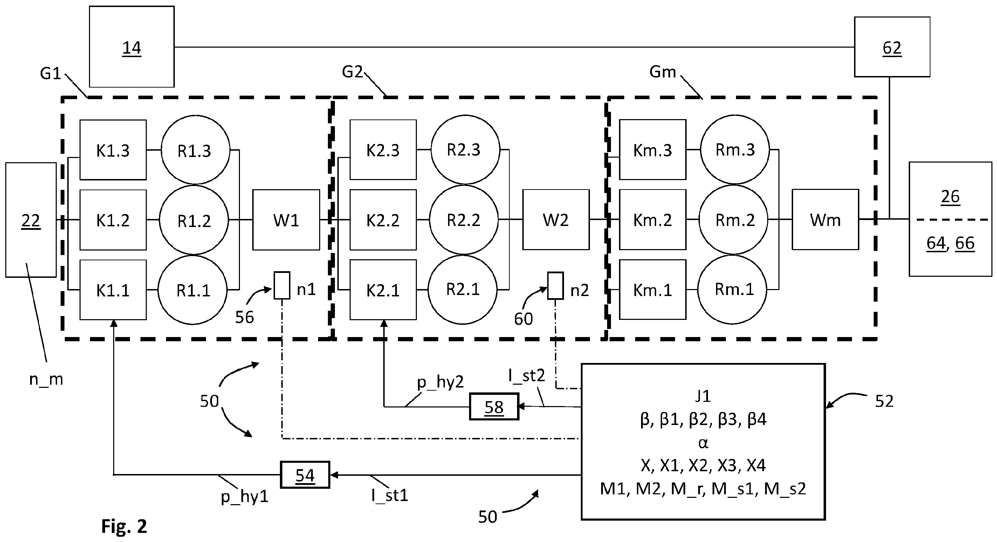

Figur 2 zeigt eine schematische und blockschaltbildartige Darstellung eines Ausführungsbeispiels der Vorrichtung 50 und einzelne Bestandteile des Zugfahrzeugs 10. Die Getriebeanordnung 30 weist eine Anzahl 1 bis m Getriebestufen G auf, wobei im vorliegenden Beispiel m = 3 ist, folglich drei Getriebestufen G1, G2, G3 vorhanden sind.

Der Antriebsmotor 22 ist abtriebsseitig mit der ersten Getriebestufe G1 antriebsverbindbar bzw. antriebsverbunden. Die erste Getriebestufe G1 enthält beispielhaft drei Kupplungen K1.1, K1.2, K1.3, welche jeweils mittels einer spezifischen Übersetzung R1.1, R1.2, R1.3 mit einer Abtriebswelle W1 antriebsverbunden sind. Die Übersetzungen R1.1, R1.2, R1.3 sind vorzugsweise als Zahnradsätze oder Zahnradstufen ausgebildet. Die Kupplungen K1.1, K1.2, K1.3 sind antriebsseitig mit dem Antriebsmotor 22 antriebsverbunden oder antriebsverbindbar. Abtriebsseitig sind die Kupplungen K1.1, K1.2, K1.3 mit der Abtriebswelle W1 antriebsverbunden. Die Kupplungen K1.1, K1.2, K1.3 sind jeweils über ein hydraulisches Ventil zwischen einem geschlossenen Zustand (mit vollständiger Kraftübertragung) und einem geöffneten Zustand (mit unterbrochener Kraftübertragung) ansteuerbar. Beispielhaft ist diese Ansteuerung anhand eines hydraulischen Ventils 54 für die Kupplung K1.1 dargestellt. Mittels der Steuereinheit 52 ist das Ventil 54 betätigbar und/oder einstellbar. Hierbei legt die Steuereinheit 52 die Werte eines elektrischen Steuerstromes $I\_st\_1.1$ für das hydraulische Ventil 54 fest bzw. stellt diese Werte ein und/oder verarbeitet diese Werte. Die Kupplung K1.1 kann dann mittels des Steuerstromes $I\_st\_1.1$ bzw. mittels eines hydraulischen Ausgangsdruckes $p\_hy1$ des Ventils 54 angesteuert werden.

Eine die Rotation der Abtriebswelle W1 repräsentierende physikalische Größe, z.B. deren Drehzahl n1, wird mittels eines Drehzahlsensors 56 erfasst bzw. ermittelt. Davon kann z.B. eine Winkelbeschleunigung $\alpha$ der Abtriebswelle W1 abgeleitet werden. Der Drehzahlsensor 56 ist ebenso wie das hydraulische Ventil 54 und weitere Ventile für die Ansteuerung der anderen Kupplungen K1.2, K1.3 in der Getriebestufe G1 vorzugsweise Bestandteil der Vorrichtung 50.

Der vorbeschriebene Aufbau der Getriebestufe G1 kann analog auch für die Getriebestufe G2 und weitere Getriebestufen Gm gelten. So sind etwa in der Getriebestufe G2 deren Kupplungen K2.1, K2.2, K2.3 durch jeweils ein hydraulisches Ventil 58 ansteuerbar. Eine die Kupplungsansteuerung bewirkende physikalische Größe ist hier ein von der Steuereinheit 52 festgelegter bzw. eingestellter Steuerstrom $I\_st\_2.1$ bzw. ein hydraulischer Ausgangsdruck $p\_hy2$ des Ventils 58. Die Kupplungseinheiten in Form der Kupplungen K2.1, K2.2, K3.3 sind im Leistungsfluss des Antriebsstranges 20 der Abtriebswelle W1 nachfolgend bzw. nachgelagert angeordnet. Die Kupplungen K2.1, K2.2, K3.3 sind antriebsseitig mit der Abtriebswelle W1 antriebsverbunden und abtriebsseitig jeweils mittels einer spezifischen Übersetzung R2.1, R2.2, R2.3 mit einer Abtriebswelle W2 antriebsverbunden. Die Übersetzungen R2.1, R2.2, R2.3 sind wiederum vorzugsweise als Zahnradsätze oder Zahnradstufen ausgebildet. Eine die Rotation der Abtriebswelle W2 repräsentierende physikalische Größe, z.B. deren Drehzahl n2, wird wiederum mittels eines Drehzahlsensors 60 ermittelt. Der Drehzahlsensor 60 ist ebenso wie das hydraulische Ventil 58 und weitere Ventile für die Ansteuerung der anderen Kupplungen K2.2, K2.3 in der Getriebestufe G2 vorzugsweise Bestandteil der Vorrichtung 50.

Vorzugsweise gilt Analoges für den Aufbau der Getriebestufe Gm mit den Kupplungseinheiten in Form der Kupplungen K3.1, K3.2, K3.3 sowie der Übersetzungen R3.1, R3.2, R3.3 zu einer Abtriebswelle Wm. Die Abtriebswelle Wm ist im Leistungsfluss des Antriebsstranges 20 mit der hinteren Fahrzeugachse 26 und bedarfsweise - im Falle einer geschlossenen Allradkupplung 62 - auch mit der vorderen Fahrzeugachse 14 antriebsverbunden. Mittels einer aktivierbaren Parksperre 64 und/oder einer Bremsvorrichtung 66 des Zugfahrzeugs 10 sind die Abtriebswelle Wm und im Leistungsfluss vorgelagerte Komponenten in der Getriebeanordnung 30 bzw. in den beiden Getriebestufen G1, G2 blockierbar. Hierdurch kann beispielsweise ein abtriebsseitiges Drehmoment der Kupplung K2.1 gleich Null sein.

Wie bereits erwähnt, sind die dargestellte Anzahl der Kupplungen K in der Getriebeanordnung 30 lediglich beispielhaft zu betrachten. Einzelne Getriebestufen G können auch eine andere Anzahl als drei Kupplungen K enthalten und die Anzahl der Kupplungen K in den einzelnen Getriebestufen G kann unterschiedlich voneinander sein.

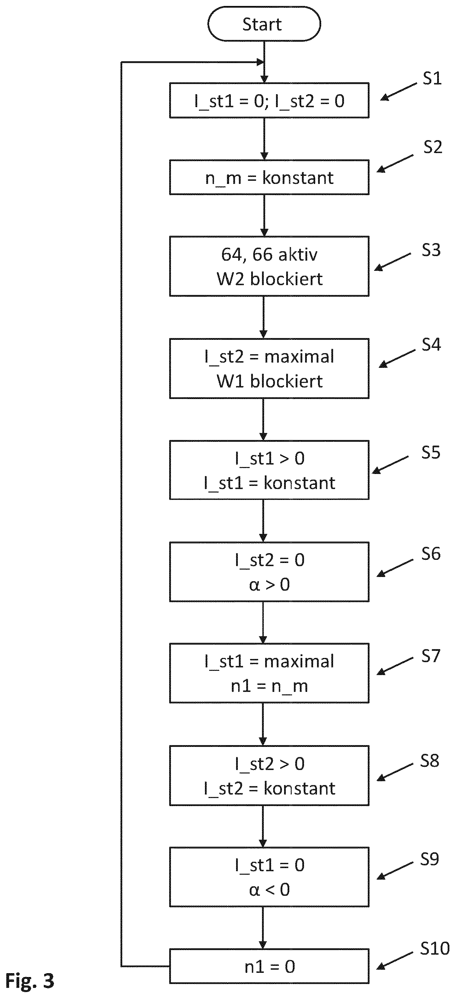

Figur 3 zeigt ein Flussdiagramm mit einzelnen Schritten der Verfahrensdurchführung zur Kalibrierung einer ausgewählten Kupplung K innerhalb des Antriebsstranges 20 bzw. innerhalb der Getriebeanordnung 30. Beispielhaft wird die Kupplung K1.1 ausgewählt und es werden nachfolgend Verfahrensschritte zu deren Kalibrierung erläutert.

In einem Verfahrensschritt S1 ist die der ausgewählten Kupplung K1.1 nachgelagerte Abtriebswelle W1 von allen vor- und nachgelagerten Antriebsverbindungen getrennt, indem sich die ausgewählte Kupplung K1.1 (sowie ggf. auch die Kupplungen K1.2, K1.3) und die Kupplung K2.1 (sowie ggf. auch die Kupplungen K2.2, K2.3) in ihrem geöffneten Zustand ($I\_st\_1.1 = 0$, $I\_st\_2.1 = 0$) befinden. In einem Verfahrensschritt S2 läuft der Antriebsmotor 22 mit einer konstanten Drehzahl $n\_m$. In einem Verfahrensschritt S3 wird die Parksperre 64 und/oder die Bremsvorrichtung 66 aktiviert und alle der Abtriebswelle W2 nachgelagerte Kupplungen Km.1, Km.2, Km.3 befinden sich in ihrem geschlossenen Zustand. Hierdurch ist die Abtriebswelle W2 blockiert.

In einem weiteren Verfahrensschritt S4 wird auch die Abtriebswelle W1 blockiert, indem die Kupplung K2.1 mit dem maximalen elektrischen Steuerstrom I_st_2.1 angesteuert wird und sich folglich in ihrem geschlossenen Zustand befindet. Alternativ können die Verfahrensschritte S1, S2, S3, S4 auch in einer anderen Schrittfolge aneinandergereiht sein.

Nachfolgend wird der Steuerstrom I_st_1.1 für die ausgewählte Kupplung K1.1 auf einen Wert größer Null eingestellt, der für eine definierte Zeitdauer konstant gehalten wird (Verfahrensschritt S5). In diesem Zustand ist die Abtriebswelle W1 über die ausgewählte Kupplung K1.1 mit dem laufenden Antriebsmotor 22 antriebsverbunden.

Bei weiterhin konstantem Steuerstrom I_st_1.1 wird die Abtriebswelle W1 von den im Leistungsfluss nachfolgenden bzw. nachgelagerten Antriebsverbindungen getrennt. Diese Trennung erfolgt durch die Kupplung K2.1, deren Steuerstrom I_st_2.1 auf Null eingestellt wird, wodurch die Kupplung K2.1 in ihren geöffneten Zustand überführt wird (Verfahrensschritt S6). Dies führt zu einer Beschleunigung der Abtriebswelle W1 mit einer Winkelbeschleunigung $\alpha > 0$.

Der Steuerstrom I_st_1.1 wird weiter konstant gehalten, so dass Drehzahl n1 der Abtriebswelle W1 ansteigt und insbesondere die Motordrehzahl n_m des Antriebsmotors 22 erreichen kann. In einem nachfolgenden Verfahrensschritt S7 wird die Kupplung K1.1 mit dem maximalen Steuerstrom I_st_1.1 angesteuert und hierdurch in ihren geschlossenen Zustand überführt. Dabei rotiert die Abtriebswelle W1 mit der Motordrehzahl n_m des Antriebsmotors 22. Daraufhin wird die Kupplung K2.1 mit einem festgelegten bzw. eingestellten Steuerstrom I_st_2.1 > 0 angesteuert (Verfahrensschritt S8), wobei ein abtriebsseitiges Drehmoment dieser Kupplung K2.1 aufgrund der blockierten nachgelagerten Abtriebswelle W2 gleich Null ist.

Nach diesem Verfahrensschritt S8 wird der Steuerstrom I_st_1.1 der Kupplung K1.1 auf I_st_1.1 = 0 eingestellt, wodurch die Kupplung K1.1 in ihren geöffneten Zustand überführt wird (Verfahrensschritt S9). Dies führt zu einer Verzögerung der Abtriebswelle W1 mit einer Winkelbeschleunigung $\alpha < 0$. Dabei wird der festgelegte bzw. eingestellte Steuerstrom I_st_2.1 der Kupplung 2.1 solange konstant gehalten, bis die Abtriebswelle W1 die Drehzahl n1 = 0 erreicht (Verfahrensschritt S10).

Mit den erläuterten Verfahrensschritten S1 bis S10 werden die ausgewählte Kupplung K1.1 und die der Abtriebswelle im Leistungsfluss nachgelagerte Kupplungseinheit bzw. Kupplung K2.1 in spezifischer Weise und zeitlich nacheinander für spezifische Zeitdauern angesteuert, um geeignete Beschleunigungs- und Verzögerungsabläufe an der Abtriebswelle W1 zu realisieren.

Nach dem Verfahrensschritt S10 kann der Ablauf erneut gestartet werden, um in den Verfahrensschritten S5 und/oder S8 andere Werte des Steuerstromes I_st_1.1 und/oder des Steuerstromes I_st_2.1 festzulegen bzw. einzustellen.

Zur Generierung von Kalibrierdaten $\beta$ für die ausgewählte Kupplung K1.1 sind insbesondere folgende Größen relevant:

- die festgelegten bzw. eingestellten Steuerströme I_st_1.1, I_st_2.1,
- die mittels des Drehzahlsensors 56 erfassten Drehzahlen n1 der Abtriebswelle W1 und der daraus ermittelten Winkelbeschleunigung $\alpha$ der Abtriebswelle W1,
- das durch Berechnung bekannte Trägheitsmoment J1 der Abtriebswelle W1,
- die eingestellte Drehzahl n_m des Antriebsmotors 22,
- das Übersetzungsverhältnis R1.1.

Diese Größen bzw. deren Werte werden einander zugeordnet zur Generierung der Kalibrierdaten $\beta$ in Abhängigkeit von dieser Zuordnung.

Für die Kalibrierdaten $\beta = (\beta_1, \beta_2, \beta_3, \beta_4)$ für die ausgewählte Kupplung K1.1 gelten folgende Gleichungen

$$X1 = n1^2 \qquad\qquad (Gl.\ 2),$$

$$X2 = (n1 - (n\_m \cdot R1.1))^2 \qquad\qquad (Gl.\ 3),$$

$$X3 = I\_st\_1.1 \qquad\qquad (Gl.\ 4),$$

$$X4 = I\_st\_2.1 \qquad\qquad (Gl.\ 5).$$

Ausgehend von den Gleichungen Gl. 2 bis Gl. 5 wird Gleichung Gl. 1 berechnet. Dadurch erhält man den Ergebnisvektor $\beta$. Dabei gilt:

$$\beta_1 = f1\ /\ J1 \qquad\qquad (Gl.\ 6),$$

$$\beta 2 = f2 \: / \: J1 \qquad \qquad (Gl. 7),$$

$$\beta 3 = M1 \: / \: J1 \qquad \qquad (Gl. 8),$$

$$\beta 4 = M2 \: / \: J1 \qquad \qquad (Gl. 9).$$

Dabei können die Komponenten $\beta 1$, $\beta 2$ als physikalische Korrekturgrößen betrachtet werden.

Die Komponente $\beta 1$ enthält einen Faktor f1, welcher die Summe aus dem Schleppmoment M_s2 zu den Kupplungen K2.1 bis K2.3 und das Reibmoment M_r umfasst, also f1 = -(M_s2-M_r).

Die Komponente $\beta 2$ enthält einen Faktor f2 = - M_s1, welcher das Schleppmoment M_s1 zu den Kupplungen K1.1 bis K1.3 umfasst.

Das Drehmoment M1 ergibt sich aus $\beta 3 \cdot J1$ für die Kupplung K1.1 bei einem durch die Steuereinheit 52 festgelegten bzw. eingestellten Steuerstrom I_st_1.1. Das Drehmoment M2 ergibt sich aus $\beta 4 \cdot J1$ für die Kupplung K2.1 bei einem durch die Steuereinheit 52 festgelegten bzw. eingestellten Steuerstrom I_st_2.1.

Die vorgenannten Verfahrensschritte zur Kalibrierung einer ausgewählten Kupplung, z.B. der Kupplung K1.1, können für unterschiedlich festgelegte Werte der Steuerströme I_st_1.1, I_st_2.1 wiederholt werden, so dass in den Kalibrierdaten $\beta$, insbesondere in der Komponente $\beta 3$, ein Drehmoment M1 der Kupplung K1.1 für unterschiedliche Steuerströme I_st_1.1 enthalten ist. Mit anderen Worten repräsentieren die Kalibrierdaten $\beta$, insbesondere die Komponente $\beta 3$, eine Drehmoment-Charakteristik der Kupplung K1.1. Diese Drehmoment-Charakteristik kann mittels der Kalibrierdaten $\beta$, insbesondere der Komponente $\beta 3$, als eine vollständige Kennlinie bereitgestellt werden.

Die Kalibrierdaten $\beta$ können prinzipiell für beliebige Kupplungen K1.1 bis Km.3 innerhalb des Antriebsstranges 20 bzw. der Getriebeanordnung 30 generiert werden.

Im praktischen Anwendungsfall der generierten und bereitgestellten Kalibrierdaten $\beta$ wird beispielsweise die Kupplung K1.1 mittels des Steuerstromes I_st_1.1 in Richtung des geöffneten Zustands bis zu einem Zustand "beginnender Schlupf der Kupplung" angesteuert. In Abhängigkeit von dem Wert des Steuerstromes I_st_1.1 in diesem Zustand kann mittels der bereitgestellten Kalibrierdaten $\beta$, insbesondere $\beta 3$, an der Kupplung K1.1 das Drehmoment M1, und insbesondere Reibmomente und Schleppmomente gemäss $\beta 1 \: und \: \beta 2$, ermittelt werden, durch welches wiederum ein an einer bestimmten Position des Antriebsstranges 20 wirkendes Drehmoment bestimmt werden kann. In Abhängigkeit von dem Wert des Steuerstromes I_st_2.1 in diesem Zustand kann mittels der bereitgestellten Kalibrierdaten $\beta$, insbesondere $\beta 4$, an der Kupplung K2.1 das Drehmoment M2, insbesondere unter Berücksichtigung Reibmomente und Schleppmomente gemäss $\beta 1 \: und \: \beta 2$, ermittelt werden.

Hierdurch können die bereitgestellten Kalibrierdaten $\beta$ beispielsweise ein Antriebsmanagement (z.B. Traktionshilfe) für das Zugfahrzeug 10 unterstützen.

**Patentansprüche**

1. Verfahren zur Kalibrierung einer ausgewählten Kupplung (K1.1), welche innerhalb eines Antriebsstranges (20) eines landwirtschaftlichen Zugfahrzeugs (10) angeordnet zwischen einem geschlossenen und einem geöffneten Zustand ansteuerbar ist, wobei

   - die ausgewählte Kupplung (K1.1) antriebsseitig mit einem laufenden Antriebsmotor (22) des landwirtschaftlichen Zugfahrzeugs (10) antriebsverbunden ist und abtriebsseitig mit einer Abtriebswelle (Wm, W1) antriebsverbunden ist,
   - der Wert einer die Kupplungsansteuerung bewirkenden physikalischen Größe (I_st_m.n, I_st_1.1) festgelegt wird, wobei die die Kupplung (Mm.n, K1.1) ansteuernde physikalische Größe ein elektrischer Steuerstrom (I_st_m.n, I_st_1.1) eines die Kupplung (Km.n, K1.1) ansteuernden hydraulischen Ventils (54) ist, und eine die Rotation der Abtriebswelle (Wm, W1) repräsentierende physikalische Größe ($\alpha$) ermittelt wird und dem Wert der die Kupplungsansteuerung bewirkenden physikalischen Größe (I_st_m.n, I_st_1.1) zugeordnet wird zur Generierung von Kalibrierdaten ($\beta$) der ausgewählten Kupplung (Km.n, K1.1) in Abhängigkeit von dieser Zuordnung, **dadurch gekennzeichnet, dass** die die Rotation der Abtriebswelle (Wm, W1) repräsentierende physikalische Größe eine Winkelbeschleunigung ($\alpha$) der Abtriebswelle (Wm, W1) ist.

2. Verfahren nach Anspruch 1, **dadurch gekennzeichnet, dass** das Verfahren nacheinander für unterschiedlich festgelegte Werte der die Kupplungsansteuerung bewirkenden physikalischen Größe (I_st_m.n, I_st_1.1) durchgeführt wird.

3. Verfahren nach Anspruch 1 oder 2, **dadurch gekennzeichnet, dass** die Winkelbeschleunigung ($\alpha$) der Abtriebswelle (Wm, W1)

- eine durch die Ansteuerung der ausgewählten Kupplung (Km.n, K1.1) bewirkte Beschleunigungsphase aufweist, und
- eine Verzögerungsphase aufweist, welche zumindest zeitweise durch die Ansteuerung einer im Leistungsfluss des Antriebsstranges (20) nachfolgenden Kupplungseinheit (Km+1.n, K2.1) bewirkt wird.

4. Verfahren nach einem der vorhergehenden Ansprüche, **dadurch gekennzeichnet, dass** in den Kalibrierdaten ($\beta$) ein Trägheitsmoment (Jm, J1) der Abtriebswelle (Wm, W1) enthalten ist.

5. Verfahren nach einem der vorhergehenden Ansprüche, **dadurch gekennzeichnet, dass** in den Kalibrierdaten ($\beta$) mindestens eine physikalische Korrekturgröße ($\beta1$, $\beta2$) enthalten ist, welche

- ein Schleppmoment (M_sm, M_s1) der ausgewählten Kupplung (Km.n, K1.1) umfasst, und/oder
- ein Schleppmoment (M_sm+1, M_s2) einer der Abtriebswelle (Wm, W1) im Leistungsfluss des Antriebsstranges (20) nachfolgenden Kupplungseinheit (Km+1,n, K2.1) umfasst, und/oder
- ein Reibmoment (M_r) der Abtriebswelle (Wm, W1) umfasst.

6. Verfahren nach einem der vorhergehenden Ansprüche, **dadurch gekennzeichnet, dass** zur Generierung, insbesondere Ermittlung, mindestens einer der folgenden Schritte durchgeführt wird:

- die Abtriebswelle (Wm, W1) wird im Leistungsfluss des Antriebsstranges (20) von allen vor- und nachgelagerten Antriebsverbindungen (Km.n, Km+1.n, K1.1, K2.1) getrennt,
- die Abtriebswelle (Wm, W1) wird beschleunigt, indem sie mit dem Antriebsmotor (22) antriebsverbunden wird und von den im Leistungsfluss des Antriebsstranges (20) nachgelagerten Antriebsverbindungen (Km+1.n, K2.1) getrennt wird,
- die mit dem Antriebsmotor (22) antriebsverbundene Abtriebswelle (Wm, W1) rotiert mit einer Drehzahl (n_m, n1, n_motor), insbesondere konstanter Drehzahl (n_m, n1, n_motor),
- die rotierende Abtriebswelle (Wm, W1) wird verzögert, indem eine im Leistungsfluss des Antriebsstranges (20) nachfolgende Kupplungseinheit (Km+1.n, K2.1) mit einem festgelegten Wert einer deren Kupplungsansteuerung bewirkenden physikalischen Größe (I_st_m+1.n, I_st_2.1) angesteuert, wobei ein abtriebsseitiges Drehmoment dieser Kupplungseinheit (Km+1.n, K2.1) gleich Null ist.

7. Verfahren nach Anspruch 6, **dadurch gekennzeichnet, dass** während der Verzögerung der rotierenden Abtriebswelle (Wm, W1) die ausgewählte Kupplung (Km.n, K1.1) in ihrem geöffneten Zustand ist.

8. Verfahren nach Anspruch 6 oder 7, **dadurch gekennzeichnet, dass** zumindest während der Verzögerung der Abtriebswelle (Wm, W1) eine Parksperre (64) und/oder eine Bremsvorrichtung (66) des Zugfahrzeugs (10) aktiviert ist.

9. Verfahren nach einem der vorhergehenden Ansprüche, **dadurch gekennzeichnet, dass** die Motor-Drehzahl (n_motor) des Antriebsmotors (22) während der Durchführung des Verfahrens zumindest zeitweise konstant gehalten wird.

10. Vorrichtung (50) zur Kalibrierung einer ausgewählten Kupplung (Km.n, K1.1), welche innerhalb eines Antriebsstranges (20) eines landwirtschaftlichen Zugfahrzeugs (10) angeordnet zwischen einem geschlossenen und einem geöffneten Zustand ansteuerbar ist, mit einer Steuereinheit (52) zur Durchführung des Verfahrens nach einem der Ansprüche 1 bis 9.

11. Vorrichtung nach Anspruch 10, **dadurch gekennzeichnet, dass** sie

- ein hydraulisches Ventil (54) zur Ansteuerung der ausgewählten Kupplung (Km.n, K1.1) zwischen einem geschlossenen und einem geöffneten Zustand aufweist, und/oder
- einen Drehzahlsensor (56) aufweist zur Erfassung einer Drehzahl (n_m, n1) einer Abtriebswelle (Wm, W1), welche an der Abtriebsseite der ausgewählten Kupplung (Km.n, K1.1) mit dieser antriebsverbunden ist.

12. Landwirtschaftliches Zugfahrzeug (10) mit einer Vorrichtung (50) nach Anspruch 10 oder 11.

**Claims**

1. Method for calibrating a selected clutch (K1.1) which, arranged within a drivetrain (20) of an agricultural towing vehicle (10), is activatable between a closed and an open state, wherein

   - the selected clutch (K1.1) is connected in terms of drive on the drive side to a running drive motor (22) of the agricultural towing vehicle (10) and is connected in terms of drive on the output side to an output shaft (Wm, W1),
   - the value of a physical variable (I_st_m.n, I_st_1.1) bringing about the clutch activation is defined, wherein the physical variable activating the clutch (Mm.n, K1.1) is an electrical control current (I_st_m.n, I_st_1.1) of a hydraulic valve (54) activating the clutch (Km.n, K1.1), and a physical variable ($\alpha$) representing the rotation of the output shaft (Wm, W1) is determined and assigned to the value of the physical variable (I_st_m.n, I_st_1.1) bringing about the clutch activation, in order to generate calibration data ($\beta$) of the selected clutch (Km.n, K1.1) depending on said assignment, **characterized in that** the physical variable representing the rotation of the output shaft (Wm, W1) is an angular acceleration ($\alpha$) of the output shaft (Wm, W1).

2. Method according to Claim 1, **characterized in that** the method is carried out successively for differently defined values of the physical variable (I_st_m.n, I_st_1.1) bringing about the clutch activation.

3. Method according to Claim 1 or 2, **characterized in that** the angular acceleration ($\alpha$) of the output shaft (Wm, W1)

   - has an acceleration phase brought about by the activation of the selected clutch (Km.n, K1.1), and
   - has a deceleration phase which is at least temporarily brought about by the activation of a clutch unit (Km+1.n, K2.1) following downstream in the power flow of the drivetrain (20).

4. Method according to any one of the preceding claims, **characterized in that** a moment of inertia (Jm, J1) of the output shaft (Wm, W1) is contained in the calibration data ($\beta$).

5. Method according to any one of the preceding claims, **characterized in that** the calibration data ($\beta$) contain at least one physical correction variable ($\beta$1, $\beta$2) which

   - comprises a drag torque (M_sm, M_s1) of the selected clutch (Km.n, K1.1), and/or
   - comprises a drag torque (M_sm+1, M_s2) of a clutch unit (Km+1,n, K2.1) following downstream of the output shaft (Wm, W1) in the power flow of the drivetrain (20), and/or
   - comprises a friction torque (M_r) of the output shaft (Wm, W1).

6. Method according to any one of the preceding claims, **characterized in that**, for the generation, in particular determination, at least one of the following steps is carried out:

   - the output shaft (Wm, W1) is separated from all drive connections (Km.n, Km+1.n, K1.1, K2.1) mounted upstream and downstream in the power flow of the drivetrain (20),
   - the output shaft (Wm, W1) is accelerated by being connected in terms of drive to the drive motor (22) and being separated from the drive connections (Km+1.n, K2.1) mounted downstream in the power flow of the drivetrain (20),
   - the output shaft (Wm, W1) which is connected in terms of drive to the drive motor (22) rotates at a rotational speed (n_m, n1, n_motor), in particular constant rotational speed (n_m, n1, n_motor),
   - the rotating output shaft (Wm, W1) is decelerated by activating a clutch unit (Km+1.n, K2.1) following downstream in the power flow of the drivetrain (20) with a defined value of a physical variable (I_st_m+1.n, I_st_2.1) bringing about the clutch activation thereof, wherein an output-side torque of said clutch unit (Km+1.n, K2.1) is equal to zero.

7. Method according to Claim 6, **characterized in that**, during the deceleration of the rotating output shaft (Wm, W1), the selected clutch (Km.n, K1.1) is in its open state.

8. Method according to Claim 6 or 7, **characterized in that**, at least during the deceleration of the output shaft (Wm, W1), a parking lock (64) and/or a braking device (66) of the towing vehicle (10) is activated.

9. Method according to any one of the preceding claims, **characterized in that** the motor rotational speed (n_motor) of the drive motor (22) is kept constant at least temporarily during the carrying out of the method.

10. Device (50) for calibrating a selected clutch (Km.n, K1.1) which, arranged within a drivetrain (20) of an agricultural towing vehicle (10), is activatable between a closed and an open state, with a control unit (52) for carrying out the method according to any one of Claims 1 to 9.

11. Device according to Claim 10, **characterized in that** it

   - has a hydraulic valve (54) for activating the selected clutch (Km.n, K1.1) between a closed and an open state, and/or
   - has a rotational speed sensor (56) for detecting a rotational speed (n_m, n1) of an output shaft (Wm, W1), which is connected in terms of drive to the selected clutch (Km.n, K1.1) on the output side thereof.

12. Agricultural towing vehicle (10) having a device (50) according to Claim 10 or 11.

**Revendications**

1. Procédé d'étalonnage d'un embrayage (K1.1) sélectionné, qui peut être piloté entre un état fermé et un état ouvert tout en étant disposé dans une chaîne cinématique (20) d'un véhicule tracteur agricole (10),

   - l'embrayage (K1.1) sélectionné étant relié en entraînement côté entraînement à un moteur d'entraînement (22) tournant du véhicule agricole tracteur (10) et étant relié en entraînement côté sortie à un arbre de sortie (WM, W1),
   - la valeur d'une grandeur physique (I_st_m.n, I_st_1.1) provoquant le pilotage d'embrayage étant fixée, la grandeur physique pilotant l'embrayage (Mm.n, K1.1) étant un courant électrique de commande (I_st_m.n, I_st_1.1) d'une vanne hydraulique (54) pilotant l'embrayage (Km.n, K1.1), et une grandeur physique ($\alpha$) représentant la rotation de l'arbre de sortie (WM, W1) étant déterminée et étant associée à la valeur de la grandeur physique (I_st_m.n, I_st_1.1) provoquant le pilotage d'embrayage pour générer des données d'étalonnage ($\beta$) de l'embrayage (Km.n, K1.1) sélectionné en fonction de cette association, **caractérisé en ce que** la grandeur physique représentant la rotation de l'arbre de sortie (Wm, W1) est une accélération angulaire ($\alpha$) de l'arbre de sortie (Wm, W1).

2. Procédé selon la revendication 1, **caractérisé en ce que** le procédé est exécuté successivement pour des valeurs fixées différemment de la grandeur physique (I_st_m.n, I_st_1.1) provoquant le pilotage de couplage.

3. Procédé selon la revendication 1 ou 2, **caractérisé en ce que** l'accélération angulaire ($\alpha$) de l'arbre de sortie (Wm, W1)

   - présente une phase d'accélération provoquée par le pilotage de l'embrayage (Km.n, K1.1) sélectionné, et
   - présente une phase de décélération qui est provoquée au moins temporairement par le pilotage d'une unité d'embrayage (Km+1.n, K2.1) en aval du flux de puissance de la chaîne cinématique (20).

4. Procédé selon l'une des revendications précédentes, **caractérisé en ce que** les données d'étalonnage ($\beta$) contiennent un couple d'inertie (Jm, J1) de l'arbre de sortie (Wm, W1).

5. Procédé selon l'une des revendications précédentes, **caractérisé en ce que** les données d'étalonnage ($\beta$) contiennent au moins une grandeur de correction physique ($\beta1$, $\beta2$) qui

   - comprend un couple de remorquage (M_sm, M_s1) de l'embrayage (Km.n, K1.1) sélectionné, et/ou
   - comprend un couple de remorquage (M_sm+1, M_s2) d'une unité d'embrayage (Km+1,n, K2.1) en aval de l'arbre de sortie (Wm, W1) dans le flux de puissance de la chaîne cinématique (20), et/ou
   - comprend un couple de friction (M_r) de l'arbre de sortie (Wm, W1).

6. Procédé selon l'une des revendications précédentes, **caractérisé en ce que**, pour la génération, en particulier la détermination, au moins une des étapes suivantes est mise en oeuvre :

   - l'arbre de sortie (Wm, W1) est séparé de toutes les liaisons d'entraînement en amont et en aval (Km.n, Km+1.n, K1.1, K2.1) dans le flux de puissance de la chaîne cinématique (20),
   - l'arbre de sortie (Wm, W1) est accéléré **en ce qu'**il est relié en entraînement au moteur d'entraînement (22) et qu'il est séparé des liaisons d'entraînement (Km+1.n, K2.1) en aval dans le flux de puissance de la chaîne cinématique (20),
- l'arbre de sortie (Wm, W1) relié en entraînement au moteur d'entraînement (22) tourne à une vitesse de rotation (n_m, n1, n_moteur), en particulier à une vitesse de rotation constante n_m, n1, n_moteur),
- l'arbre de sortie rotatif (Wm, W1) est décéléré par actionnement d'une unité d'embrayage (Km+1.n, K2.1) en aval dans le flux de puissance de la chaîne cinématique (20) avec une valeur fixée d'une grandeur physique (I_st_m+1.n, I_st_2.1) provoquant son pilotage d'embrayage, un couple de rotation côté sortie de cette unité d'embrayage (Km+1.n, K2.1) étant égal à zéro.

7. Procédé selon la revendication 6, **caractérisé en ce que**, pendant la décélération de l'arbre de sortie (WM, W1) rotatif, l'embrayage (km.n, K1.1) sélectionné est dans son état ouvert.

8. Procédé selon la revendication 6 ou 7, **caractérisé en ce qu'**au moins pendant la décélération de l'arbre de sortie (Wm, W1), un frein de stationnement (64) et/ou un dispositif de freinage (66) du véhicule tracteur (10) sont activés.

9. Procédé selon l'une des revendications précédentes, **caractérisé en ce que** la vitesse de rotation de moteur (n_moteur) du moteur d'entraînement (22) est maintenue constante au moins temporairement pendant la mise en œuvre du procédé.

10. Dispositif (50) pour l'étalonnage d'un embrayage (km.n, K1.1) sélectionné, qui peut être piloté entre un état fermé et un état ouvert tout en étant commandé dans une chaîne cinématique (20) d'un véhicule tracteur agricole (10), avec une unité de commande (52) pour la mise en œuvre du procédé selon l'une des revendications 1 à 9.

11. Dispositif selon la revendication 10, **caractérisé en ce qu'**il

    - comporte une soupape hydraulique (54) pour piloter l'embrayage (Km.n, K1.1) sélectionné entre un état fermé et un état ouvert, et/ou
    - comporte un capteur de vitesse de rotation (56) pour détecter une vitesse de rotation (n_m, n1) d'un arbre de sortie (Wm, W1), qui est relié en entraînement à l'embrayage sur le côté de sortie de l'embrayage (Km.n, K1.1) sélectionné.

12. Véhicule tracteur agricole (10) avec un dispositif (50) selon la revendication 10 ou 11.

Fig. 1

Fig. 2

EP 4 467 835 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1293697 A2
- US 2015094922 A1
- DE 102018200835 A1
- US 10060486 B2
- US 2018187728 A1
- US 2017198656 A1